Europäisches Patentamt

European Patent Office

Office européen des brevets

(11) Numéro de publication: **0 120 733**
**B1**

(12) **FASCICULE DE BREVET EUROPÉEN**

(45) Date de publication du fascicule du brevet:
**08.06.88**

(51) Int. Cl.⁴: **F 02 M 31/16**

(21) Numéro de dépôt: **84400331.9**

(22) Date de dépôt: **17.02.84**

(54) Dispositif pour le réchauffage du carburant dans les moteurs Diesel.

(30) Priorité: **22.02.83 FR 8302821**

(43) Date de publication de la demande:
**03.10.84 Bulletin 84/40**

(45) Mention de la délivrance du brevet:
**08.06.88 Bulletin 88/23**

(84) Etats contractants désignés:
**AT BE CH DE FR GB IT LI LU NL SE**

(56) Documents cité:
**EP-A-0 069 639**
**FR-A-1 409 697**
**FR-A-2 177 159**
**FR-A-2 256 323**
**FR-A-2 486 154**
**US-A-2 991 777**
**US-A-4 349 001**

(73) Titulaire: **SCOMA - ENERGIE, Sarl dite:, 11- 13 Rue Forest, F-75018 Paris (FR)**

(72) Inventeur: **Rédélé, Jean Emile Amédée, 11- 13 rue Forest, F-75018 Paris (FR)**

(74) Mandataire: **Pinguet, André, CAPRI 28 bis, avenue Mozart, F-75016 Paris (FR)**

EP 0 120 733 B1

## Description

La présente invention a pour objet un dispositif d'échange thermique, en particulier pour le réchauffage du carburant dans les moteurs, notamment Diesel.

Il est connu que le réchauffage, à une température de l'ordre de 70°C à 80°C, du carburant alimentant un moteur Diesel favorise l'écoulement dudit carburant et provoque, à puissance et à caractéristiques de fonctionnement du moteur égales, une diminution stantielle de la consommation.

Pour réchauffer le carburant à une température suffisante, divers dispositifs ont été imaginés jusqu'à présent, dans lesquels la source de chaleur utilisée est constituée par les gaz d'échappement, par le liquide de refroidissement, ou par l'huile servant à la lubrification du moteur.

Ainsi le brevet français 2 486 154 prévoit un dispositif de préchauffage du carburant pour moteur Diesel comprenant un échangeur à deux chambres, une chambre étant traversée par le carburant et l'autre chambre par le liquide de refroidissement du moteur, cette dernière chambre étant montée en dérivation sur le circuit de refroidissement du moteur.

Le brevet américain 2 991 777, quant à lui, décrit un économiseur de carburant pour carburateurs de moteur à piston comportant essentiellement un réservoir cylindrique traversé de part en part longtitudinalement par deux tubes. Chacun de ces tubes est entouré sur la plus grande partie de sa longueur par un serpentin à spires non jointives ayant son origine à l'extérieur du réservoir et une extrémité débouchant librement à l'intérieur du réservoir. Dans un tube circule l'eau de réfrigération du moteur, dans l'autre tube circule l'huile de lubrification du moteur et dans les serpentins, ainsi qu'à l'intérieur du reservoir, circule le carburant (l'entrée du carburant se faisant par un serpentin et la sortie par l'autre serpentin).

L'inconvénient de ces dispositifs, outre que, eu égard à leur formation, ils ne permettent qu'une température de préchauffage limitée et difficilement ajustable, est qu'ils ne dispensent pas d'installer sur le moteur concerné un échangeur huile/liquide de refroidissement, lequel est nécessaire pour maintenir la température de l'huile moteur à un niveau approprié.

Conformément à la présente invention, pour réchauffer le carburant, on prévoit un dispositif destiné à provoquer des échanges thermiques simultanément entre le carburant à réchauffer, l'huile de lubrification et l'eau de refroidissement du moteur. On sait que l'huile de lubrification peut atteindre pendant le fonctionnement normal du moteur des températures de l'ordre de 100 à 140°C. On disposé ainsi d'une plage de températures chaudes très étendue. En déterminant l'importance des surfaces d'échange relatives et des débits, on peut choisir à volonté la température de réchauffage du carburant à une, teméprature égale ou supérieure à celle de l'eau du circuit de refroidissement, et jusqu'à une température supérleure à 100°C.

Le dispositif de réchauffage du carburant dans les moteurs Diesel selon l'invention comporte un échangeur thermique comprenant trois circuits: un circuit de liquide de refroidissement du moteur, un circuit de carburant (gazole) et un circuit d'huile, chaque circuit comportant des parois d'échange thermique communes avec chacun des deux autres circuits.

D'autres caractéristiques de l'invention apparaîtront au cours de la description qui va suivre, d'un mode de réalisation donné à titre d'exemple non limitatif en regard des dessins ci-joints, et qui fera bien comprendre comment l'invention peut être réalisée et mise en oeuvre.

Sur les dessins :
- la figure 1 est un schéma de circulation générale du carburant dans le cas d'un moteur Diesel équipé d'un dispositif selon la présente invention ;
- la figure 2 est une vue en coupe axiale d'un dispositif selon l'invention, permettant la mise en oeuvre du procédé selon l'invention ;
- la figure 3 est une vue en coupe suivant le plan indiqué III-III sur la figure 2 ;
- la figure 4 est une vue en coupe suivant le plan indiqué IV-IV sur la figure 2 ; et
- la figure 5 est un schéma des circulations d'huile et de carburant dans une zone externe de l'échangeur.

Le dispositif selon l'invention sert simultanément au réchauffage du carburant, plus particulièrement du gazole pour les moteurs Diesel et au refroidissement de l'huile. Il est placé sur le circuit du gazole. Selon les cas, il peut être placé en amont ou en aval de la pompe d'injection comme cela est expliqué dans le brevet précédent de la demanderesse, référencé ci-dessus. Dans l'exemple suivant, le dispositif selon l'invention est monté en amont du système d'injection.

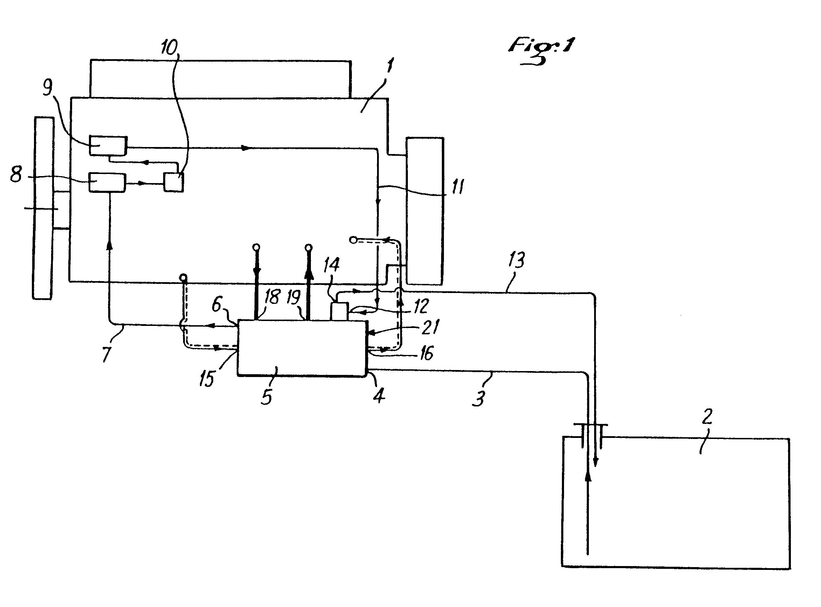

Sur la figure 1, on a représenté schématiquement un moteur 1, équipé d'un dispositif selon l'invention. Le réservoir de gazole 2 est relié par une conduite 3 à l'entrée 4 d'un dispositif échangeur 5 selon l'invention. Le gazole réchauffé sort en 6 et est envoyé par la canalisation 7 d'abord à la pompe d'alimentation 8, puis à la pompe d'injection 9 après avoir traversé le filtre 10. Une canalisation de retour 11 ramène à l'entrée 12 l'excédent de gazole provenant de la pompe d'injection, et une canalisation 13 renvoie dans le réservoir l'excédent de gazole provenant de la sortie 14 de l'échangeur. L'échangeur comporte encore une entrée 15 et une sortie 16 d'eau, et une entrée 18 et une sortie 19 d'huile. Ces entrées et sorties 15, 16, 18, 19 sont raccordées convenablement aux circuits correspondants. Enfin une prise électrique 21 permet de brancher une résistance de chauffage prévue à l'intérieur du dispositif.

En effet, selon une caractéristique de l'invention, un réservoir 23 est associé à l'échangeur. Ce réservoir qui peut comporter un serpentin chauffant 27 ou tout autre moyen de réchauffage permet de maintenir une quantité de gazole à bonne température quand le moteur est à l'arrêt, pour permettre le démarrage dans les meilleures conditions. Il permet également un réchauffage additionnel quand la température extérieure est très basse.

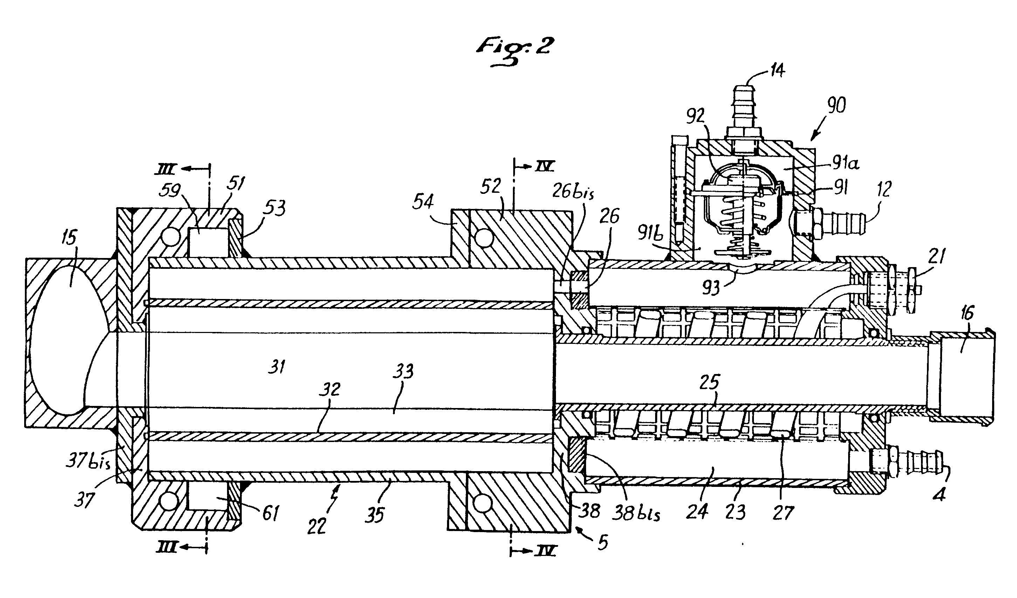

Le dispositif 5 tel que représenté sur les figures 2 à 4 comporte deux parties : un échangeur 22, à gauche de la figure et un réservoir 23 de préchauffage à droite. Ces deux parties sont sensiblement cylindriques et disposées à la suite l'une de l'autre suivant le même axe. Il ne s'agit là que d'un exemple. Les deux parties pourraient avoir des formes différentes du cylindre, et différentes l'une de l'autre. Le réservoir pourrait être placé autour de l'échangeur par exemple.

Dans la forme de réalisation représentée, l'eau (ou autre liquide de refroidissenent du moteur) traverse successivement l'échangeur 22 et le réservoir 23 en passant au centre de ceux-ci. L'eau entre chaude (en régime de marche du moteur) en 15 à gauche et sort à droite en 16.

La reservoir de préchauffage délimite un volume 24 disposé autour du tube d'eau 25. Une entrée 4 de carburant est prévue de préférence à un point écarte de l'echangeur pour éviter les zones de stagnation, et une sortie 26 fait communiquer le volume 24 avec l'échangeur 22. Un serpentin chauffant 27, avec une connexion appropriée 21, est disposé à l'intérieur du réservoir 23 dans le volume 24. Le serpentin chauffant comporte une résistance électrique et une régulation thermique assurant le maintien à une température choisie du gazole renfermé dans le réservoir 23. Cette température sera avantageusement inférieure à la température de réchauffage du gazole en régime normal. Le démarrage sera facilité, et le serpentin se mettra à chauffer automatiquement, si par exemple par suite de conditions climatiques très dures, le réchauffage par l'échangeur n'était pas suffisant.

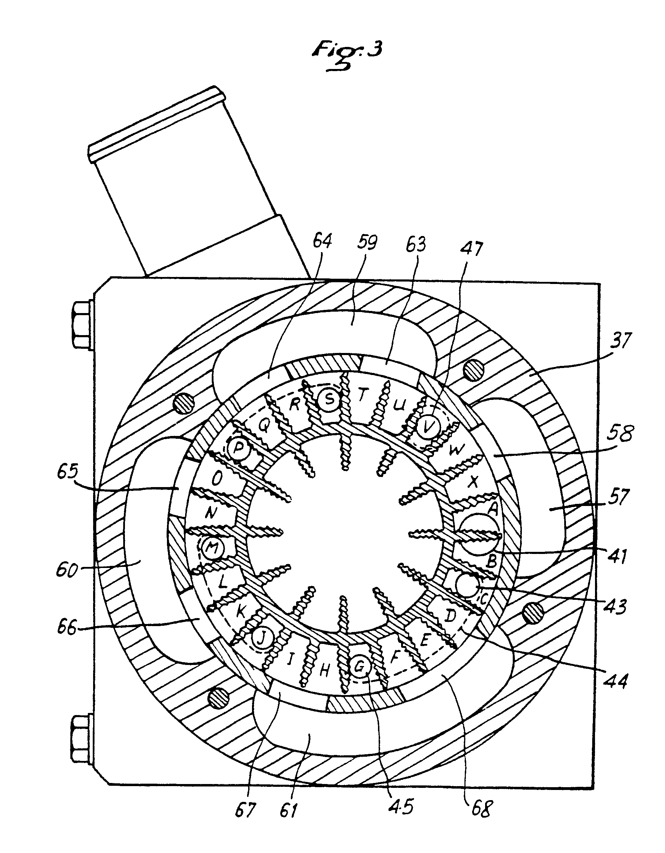

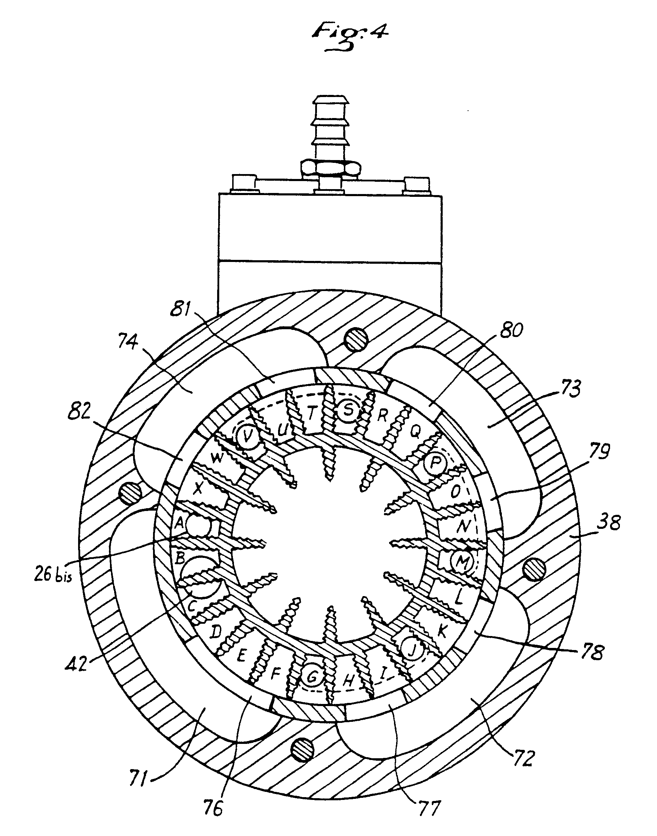

Dans l'exemple de réalisation représenté, l'échangeur comprend un faisceau de canaux parallèles (A-X) avec des connexions aux extrémités du faisceau pour déterminer trois circuits pour l'entrée 57, 58 et la sortie 76, 71 de l'huile, l'entrée 15 et la sortie 16 de l'eau, l'entrée 26 bis et la sortie 47 du carburant, chacun des circuits comportant au moins un parcours du faisceau de canaux sur sa longueur et des connexions 41, 42, 44, 59, 61, 72, 73, 74, aux extrémités du faisceau pour constituer au moins un circuit comprenant au moins deux parcours de la longueur. Dans la forme de réalisation représentée, l'échangeur comprend un canal central 31 délimité par une paroi sensiblement circulaire 32, munie d'ailettes 33 orientées vers le centre du canal 31. Comme représenté sur les figures 3 et 4, les ailettes ont une surface striée, rainurée ou moletée pour accroître la surface d'échange thermique. L'échangeur est délimité par une enveloppe 35, qui peut être cylindrique.

L'espace compris entre la paroi 32 du canal central et l'enveloppe 35 est divisé en vingt quatre canaux, référencés A à X, dont certains servent à la circulation de l'huile et d'autres à la circulation du gazole. Les parois séparant les canaux sont striées pour accroître la surface d'échange thermique. Les extrémités de l'échangeur sont obturées par des brides en forme de plaques ou de flasques 37 à gauche et 38 à droite. Pour réaliser la circulation de l'huile et du gazole, on peut ménager des ouvertures, aux deux extrémités de l'échangeur dans les flasques 37, 38 et/ou dans l'enveloppe 35 et on connecte convenablement ces ouvertures entre elles et aux circuits correspondants. On peut ainsi disposer l'huile et le gazole alternativement dans un canal sur deux ou par paires de canaux en alternance. On peut prévoir une circulation d'ensemble à contre courant et disposer plusieurs canaux ou paires de canaux en parallèle, et l'on peut organiser des circulations alternatives de droite à gauche et vice-versa. Ainsi, il est possible de prévoir des cavités dans les faces internes des flasques, à cheval sur deux ou plus de deux canaux. Les cavités peuvent être des perforations obturées vers l'extérieur par des bouchons 37 bis et 38 bis.

Dans la forme de réalisation représentée, le circuit du carburant sort du réservoir par l'orifice 26 dans le bouchon 38 bis et entre dans le canal A par l'orifice 26 bis dans le flasque 38, en regard de l'orifice 26, et à l'intérieur du profil du canal A, comme on peut le voir sur la figure 4. A l'autre extrémité de l'échangeur, un alésage 41 est percé dans le flasque 37 à cheval sur les canaux A et B. Le circuit du carburant comprend donc le canal A dans le sens de la droite vers la gauche, passe par l'alésage 41 et repart vers la droite par le canal B. Sur le flasque 38 (figure 9) un alésage 42 est percé à cheval sur les canaux B et C. Le circuit du carburant arrivant à droite par le canal B repart vers la gauche par le canal C. Dans le flasque 37 (figure 3) un alésage 43 est percé en regard du canal C et cet alésage communique par une saignée 44 formée sur la face externe du flasque 37, avec un alésage 45 formé à travers le flasque 37 à l'intérieur du profil du canal G. Le circuit de carburant empruntant la saignée 44 se prolonge par le canal C dans le sens de la gauche vers la droite. Le circuit de carburant se prolonge ainsi jusqu'à la sortie par l'alésage 47, percé dans le flasque 37 en regard du canal V et qui correspond à la sortie référencée en 6 sur la figure 1.

Le circuit d'huile pourrait être réalisé de la même façon. A titre d'exemple, dans une variante de réalisation, des communications sont établies entre des canaux disposés dans la zone extérieure de l'échangeur, au moyen d'ouvertures telles que 63, 64, 81, 82 percées dans la paroi latérale de ces canaux, ces ouvertures étant mises en communication par des passages convenables 59, 74. Les passages du circuit d'huile d'un canal à un autre se font par des alésages percés aux deux extrémités droite et gauche de l'échangeur, à travers l'enveloppe 35 et l'échangeur et les communications entre ces alésages sont assurées par des cavités formées dans les parois internes de manchons entourant l'échangeur dans les zones correspondantes. Ces manchons peuvent être les jupes 51 et 52, des flasques 37 et 38 remontant à partir des extrémités sur la paroi latérale ou cylindrique de l'enveloppe 35. Dans un but de technologie de construction, ces cavités peuvent être obturées vers le milieu de l'échangeur par des rondelles soudées 53, 54 ou fixées autrement, le cas échéant avec des joints appropriés. Les manchons peuvent être en une seule pièce, et les communications peuvent être creusées dedans par usinage.

L'arrivée du circuit d'huile (entrée huile chaude) se fait par la cavité 57, dans le flasque gauche 37 (figure 3) en communication avec l'alésage 58 dans la paroi de l'enveloppe 35 faisant communiquer cette cavité avec les deux canaux W, X. On peut voir sur la figure 3 les cavités 57, 59, 60 et 61 formées dans la paroi interne de la jupe 51 du flasque gauche 37. Ces cavités communiquent avec les canaux par les alésages 63, 64, 65, 66, 67 et 68. De la même façon, dans la surface interne de la jupe 52 du flasque 38 de droite, ont été formées les cavités 71, 72, 73 et 74. Ces cavités communiquent avec les canaux par des alésages 76, 77, 78, 79, 80, 81 et 82, pratiqués à travers l'enveloppe 35 de l'échangeur. La sortie de l'huile est faite à partir de la cavité 71, l'huile sortant des trois canaux D, E, F, par l'alésage 76. On peut ainsi suivre le trajet de l'huile dans l'échangeur. Le circuit commence par la cavité 57, l'alésage 58, les deux canaux W, X en parallèle dans le sens de la gauche vers la droite. A droite (figure 4) le circuit sort des canaux W, X passe par l'alésage 82, la cavité 74 dans la jupe 52 du flasque 38, l'alésage 81 et rentre dans les canaux T, U qu'il emprunte de la droite vers la gauche et ainsi de suite jusqu'à la cavité de sortie 71, le circuit se terminant par les trois canaux D, E, F en parallèle, ce qui permet une expansion de l'huile et un ralentissement de sa vitesse sur la fin du parcours.

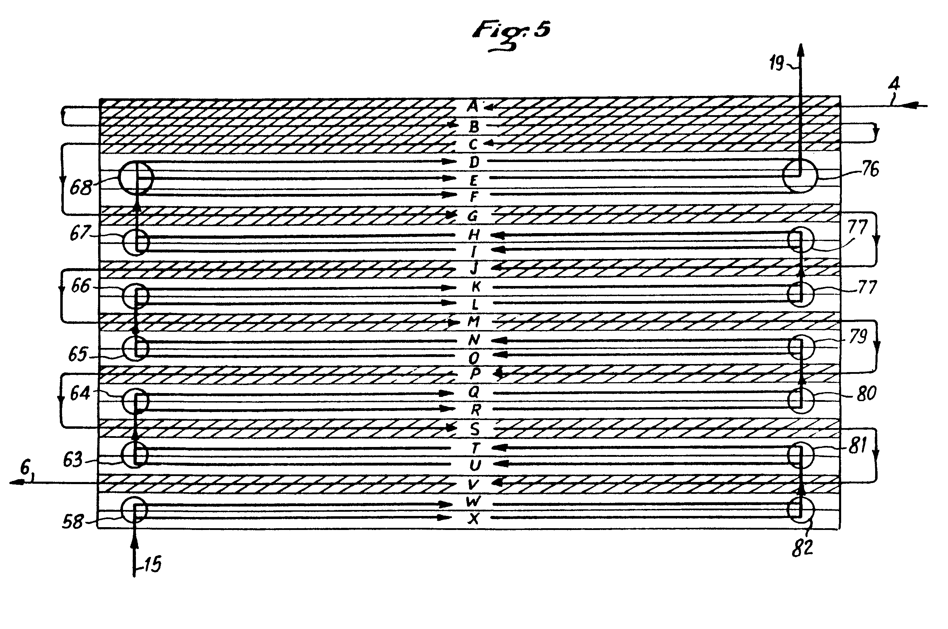

Le schéma de la figure 5 symbolise l'exemple de circuit décrit précédemment. C'est le déroulement dans un plan des canaux A à X disposés à la périphérie de la paroi 32 du canal central 31. Le circuit d'huile comprend sept parcours de l'échangeur, les six premiers sont formés par deux canaux juxtaposés en parallèle, le dernier parcours comprend trois canaux en parallèle. Le circuit de gazole, comporte également sept parcours de l'échangeur, un premier parcours dans les trois canaux A, B, C en série, et six parcours dans un seul canal. Les parcours des deux fluides sont à contre courant et les deux fluides sont en échange thermique avec l'eau qui passe dans le canal central 31.

Le nombre des canaux, ainsi que le choix des trajets n'est pas limitatif. Les canaux peuvent avoir des dimensions différentes. Il peut y en avoir plus d'une couche périphérique autour du canal central. Ce dernier n'est pas non plus une condition limitative, l'eau pouvant passer dans des canaux de formes et dispositions diverses.

L'échangeur est réalisé de préférence en un métal bon conducteur de chaleur. Il peut être réalisé par exemple par moulage, soudure, assemblage par vis, usinage, etc, avec le cas échéant des joints appropriés.

Un système de régulation thermique 90 est représenté en coupe, à droite et en haut de la figure 2. Il comprend une chambre 91 adjacente au réservoir de préchauffage 23, cette chambre comportant un organe de régulation thermique 92 sensible à la température du carburant et permettant de connecter la conduite de retour de carburant 11, 12 soit sur le réservoir de préchauffage 23, soit sur une conduite de renvoi 14, 13 vers le réservoir de carburant 2, en fonction de la température du carburant arrivant dans la chambre 91. Dans la forme de réalisation représentée, cette chambre 91 peut être séparée en deux parties 91a et 91b par un bouchon thermostatique 92. L'entrée 12 du gazole en excès revenant de la pompe d'injection débouche dans la partie 91b, adjacente au réservoir 24, et en communication avec celui-ci par l'orifice 93. La canalisation 13 de renvoi du gazole au réservoir 2 débouche dans la chambre 91a. Le bouchon thermostatique 92 d'un type connu en soi assure une double action ; quand il établit la communication entre les deux chambres 91a, 91b, il ferme l'orifice 93, et inversement quand il ouvre l'orifice 93, il ferme la communication entre les deux chambres 91a et 91b. Le mouvement du bouchon thermostatique 92 se fait pour une température de consigne T qui peut être la température choisie pour le réchauffage du gazole ou une température déterminée inférieure. Tant que la température du gazole revenant de la pompe d'injection 9 n'a pas atteint la valeur T, le bouchon est "en haut" : l'orifice 93 est ouvert et la chambre 91a est isolée de la chambre 91b. Le gazole revenant de la pompe d'injection revient dans le réservoir 23 et de là passe dans l'échangeur pour se réchauffer et repart vers l'injection. Quand la température du gazole revenant de la pompe d'injection 9 a atteint la valeur T, le bouchon prend la position "en bas". L'orifice 93 est fermé et les deux chambrres 91a et 91b sont en communication. Le gazole revenant de la pompe repart alors par la sortie 14 dans la conduite 13 pour retourner dans le réservoir 2. Ce système simple maintient la température du gazole à la valeur choisie. Il est bien entendu que l'on pourrait utiliser d'autres types de régulations, avec des capteurs de températures et des systèmes électroniques.

Le dispositif décrit est simple et fiable. Il permet un réchauffage du gazole de façon sûre et économique.

## Revendications

1. Dispositif de réchauffage du carburant dans les moteurs Diesel comportant un échangeur thermique (22) comprenant trois circuits: un circuit de liquide de refroidissement du moteur, un circuit de carburant (gazole) et un circuit d'huile, ledit échangeur thermique étant caractérisé en ce que chaque circuit comporte des parois d'échange thermique communes avec chacun des deux autres circuits.

2. Dispositif de réchauffage selon la revendication 1, caractérisé en ce que l'échangeur thermique (22) comporte un faisceau de canaux parallèles (A-X) avec des connexions aux extrémités du faisceau pour déterminer trois circuits et pour l'entrée (57, 58) et la sortie (76, 71) de l'huile, l'entrée (15) et la sortie (16) du liquide de refroidissement, l'entrée (26 bis) et la sortie (47) du carburant, chacun des circuits comportant au moins un parcours du faisceau de canaux sur sa longueur et des connexions (41, 42, 44, 59, 60, 72, 73, 74) aux extrémités du faisceau pour constituer au moins un circuit comprenant au moins deux parcours de la longueur du faisceau.

3. Dispositif de réchauffage selon la revendication 2, caractérisé en ce que des communications sont établies entre des canaux (Q, R, T, U,) extérieurs de l'échangeur thermique (22) au moyen d'ouvertures (63, 64, 81, 82) percées dans la paroi latérale de ces canaux, le dispositif comprenant en outre au moins un manchon disposé autour dudit échangeur et adapté à fermer lesdites communications.

4. Dispositif de réchauffage selon une des revendications précédentes disposé sur un circuit de carburant comportant des moyens de préchauffage comprenant une résistance électrique, caractérisé en ce que lesdits moyens de préchauffage sont constitués par un réservoir de préchauffage (23) contigu à l'échangeur (22) et disposé en amont dudit échangeur sur ledit circuit de carburant.

5. Dispositif de rechauffage selon la revendication 4, caractérisé en ce que le réservoir de préchauffage (23) a au moins une paroi (35) d'échange thermique en commun avec au moins un des circuits d'huile et de liquide de refroidissement.

## Patentansprüche

1. Vorrichtung zur Vorwärmung von Kraftstoff in Dieselmotoren mit einem Wärmetauscher (22) mit drei Schaltkreisen:
(a) einen Schaltkreis für die Kühlflüssigkeit des Motors,
(b) einen Schaltkreis für den Kraftstoff (das Gasöl) und
(c) einen Schaltkreis für das Öl, wobei der Wärmetauscher dadurch gekennzeichnet ist, daß jeder Schaltkreis für den Wärmeaustausch mit jedem der beiden anderen Schaltkreise gemeinsame Wandungen aufweist.

2. Vorrichtung zur Vorwärmung von Kraftstoff nach Anspruch 1, dadurch gekennzeichnet, daß der Wärmetauscher (22) ein Bündel paralleler Kanäle (A-X) mit Verbindungen bzw. Anschlüssen an den Enden des Bündels aufweist, um drei Schaltkreiss zu determinieren bzw. zu bestimmen und für den Einlaß/Eingang (57, 58) und den Auslaß/Ausgang (76, 71) des Öls, den Einlaß/Eingang (15) und den Auslaß/Ausgang (16) der Kühlflüssigkeit, den Einlaß/Eingang (26 bis) und den Auslaß/Ausgang (47) des Kraftstoffes, wobei jeder der Schaltkreiss wenigstens einen Durchgang für das Bündel der Kanäle über seine Länge und die Verbindungen bzw. Anschlüsse (41, 42, 44, 59, 60, 72, 73, 74) an den Enden des Bündels aufweist, um wenigstens einen Schaltkreis zu bilden, der zumindest zwei Durchgänge für die Länge des Bündels aufweist.

3. Vorrichtung zur Vorwärmung von Kraftstoff nach Anspruch 2, dadurch gekennzeichnet, daß die Verbindungen bzw. Anschlüsse zwischen den Kanälen (Q, R, T, U) außerhalb des Wärmetauschers (22) in der Mitte der die Seitenwand dieser Känale durchsetzenden Öffnungen (63, 64, 81, 82) etabliert bzw. angeordnet sind, und daß die Vorrichtung außerdem wenigstens eine Muffe, bzw. Hülse umfaßt, die um den Wärmelauscher herum angeordnet und geeignet ist, die Verbindungen bzw. Anschlüsse zu schließen.

4. Vorrichtung zur Vorwärmung von Kraftstoff nach einem der vorhergehenden Ansprüche, die an/in einem Schaltkreis des Kraftstoffe angeordnet ist, der Mittel zur Vorbeheizung bzw. Vorerwärmung umfaßt, die einen elektrischen Widerstand aufwiesen, dadurch gekennzeichnet, daß die Mittel zur Vorbeheizung bzw. Vorerwärmung aus einem Behälter (23) zur Vorerwärmung gebildet ist, der an den Wärmetauscher (22) angrenzt und bezüglich diesem stromaufwärts in/an dem Schaltkreis des Kraftstoffs angeordnet ist.

5. Vorrichtung zur Vorwärmung nach Anspruch 4, dadurch gekennzeichnet, daß der Behälter (23) zur Vorerwärmung wenigstens eine Wand (35) zum Wärmeaustausch aufweist, die mit wenigstens einem der Schaltkreiss für das Öl und für die Kühlflüssigkeit gemeinsam ist.

## Claims

1. A device for heating the fuel of a motor, comprising a heat exchanger (22) having three circuits in the form of a circuit for the motor cooling liquid, a circuit for the fuel anid a circuit for the motor lubricating oil, characterised in that each circuit of said heat exchanger (22) has heat exchange walls in common with both of the two other circuits.

2. A device according to claim 1, characterised in that the heat exchanger (22) comprises a bundle of parallel channels (A-X) and connecting means at the ends thereof adapted to determinie three circuits and the inlet (57, 58) and the outlet (76, 71) forsaid oil, the inlet ( 15) and the outlet (16) for said cooling liquid, the inlet (26 bis) and the outlet (47) for said fuel, each circuit comprising at least one run of said bundle of channels over its length and optional connection means (41, 42, 44, 59, 60, 72, 73, 74) at the ends of said bundle adapted to constitute at least one circuit comprising at least two runs of the length of said bundle.

3. A device according to claim 2, characterised in that passages are adapted to establish communication between external channel (Q, R, T, U) of said heat exchanger (22) by means of openings (63, 64, 81, 82) formed in the channel side walls, said device further comprising at least one sleeve disposed around said heat exchanger and adapted to form said passages.

4. A device according to one of the preceding claims, wherein said device is mounted on a fuel circuit comprising preheating means including an electrical resistor, characterised in that said preheating means comprises a preheater tank (23) situated next to said heat exchanger (22) and upstream of said exchanger on said fuel circuit.

5. A device according to claim 4, characterised in that said preheater tank (23) has at least one heat exchange wall (35) in common with at least one of said oil and cooling liquid circuits.

Fig.1

_Fig.2_

## Fig. 3

Fig: 4

*Fig. 5*

0 120 733